# FASCICULE DE BREVET EUROPEEN

(11) **EP 2 191 924 B1**
(45) Date de publication et mention de la délivrance du brevet: **24.04.2013**
(21) Numéro de dépôt: 09176399.5
(22) Date de dépôt: 18.11.2009
(51) Int. Cl.: B23D 61/02

(54) **Lame de scie circulaire**
Kreissägeblatt
Circular saw blade

(30) Priorité: 27.11.2008 LU 91502
(43) Date de publication de la demande: 02.06.2010
(73) Titulaire: Finus S.A.H., 5532 Remich (LU)
(72) Inventeur:
(74) Mandataire: Office Freylinger

(56) Documents cités:
- EP-A1- 0 523 260
- AT-B- 338 130
- CN-A- 101 049 645
- DE-A1- 2 730 912
- DE-U1- 20 317 521
- JP-A- 7 276 304
- US-A- 4 570 517

## Description

### Domaine technique

La présente invention concerne une lame de scie circulaire avec couronne abrasive selon le préambule de la revendication 1 telle qu'utilisée pour la découpe à chaud ou à froid de profilés métalliques, notamment en acier, en acier spécial, en acier allié ou en fonte. Une lame de scie de grand diamètre conçue selon l'invention s'applique en particulier à la découpe à chaud ou à froid de blooms, billettes, poutrelles en acier, ronds, rails et tubes à la sortie de trains de laminoir.

### Etat de la technique

Une telle lame est connue du document CN 101049645 A.

Des lames de scie circulaires métalliques fabriquées en une pièce sont connues. Sont également connues des lames de scie monobloc en matériau abrasif.

Dans la demande de brevet chinois CN 101049645A est décrite une lame de scie circulaire en deux parties composée d'un disque de support métallique et d'une couronne abrasive en forme d'anneau fixée sur le pourtour du disque de support métallique. Le disque de support de la lame de scie selon ce document présente sur son pourtour une couronne de fixation sur laquelle est fixée la couronne abrasive. La couronne de fixation présente une pluralité d'encoches permettant d'accrocher la couronne abrasive qui s'étend radialement au-delà du disque de support. Selon ce document les encoches d'accrochage ont une forme trapézoïdale dans le plan du disque de support. L'ouverture des encoches vers l'extérieur du disque de support représente la petite base d'un trapèze, c.-à-d. que cette ouverture constitue un orifice d'entrée suivi d'un élargissement circonférentiel dû à la forme trapézoïdale de l'encoche.

Une lame de scie pour la découpe à chaud ou à froid de profilés métalliques est typiquement soumise à des contraintes importantes lors de son utilisation en raison de son diamètre et de la vitesse de coupe élevés. Ces contraintes sont encore plus prononcés dans le cas d'une lame de scie monobloc à abrasif qui subit typiquement des efforts supérieurs d'au moins 25% par rapport aux efforts subis par une lame de scie monobloc métallique dans les mêmes conditions de travail. Face à de telles contraintes, une lame de scie telle que proposée dans le document CN 101049645A présente donc un certain risque de décrochage de l'abrasif et un risque de fatigue, voire de détérioration, de la couronne de fixation.

Par ailleurs, les lames de scie disponibles présentent des vibrations importantes lors de leur utilisation, en particulier à des vitesses de coupe élevées. Il en résulte les inconvénients d'usure excessive de l'abrasif et des bruits de coupe élevés qui conduisent à des conditions de travail peu agréables.

### Objet de l'invention

La présente invention a pour objet de proposer une lame de scie circulaire composée présentant un accrochage amélioré de l'abrasif sur le disque de support métallique. Cet objectif est atteint par une lame de scie circulaire selon la revendication 1. Une lame de scie selon l'invention s'avère plus résistante et donc plus fiable, particulièrement dans le cas d'une lame de scie à grand diamètre utilisée à des vitesses de coupe élevées pour la coupe à chaud ou à froid de matériaux ferreux, notamment de produits en acier, acier spécial ou acier allié sur les trains de laminoir.

### Description générale de l'invention

Une lame de scie circulaire comprend de façon connue en soi un disque de support métallique présentant sur son pourtour une couronne de fixation, en forme d'anneau cylindrique par exemple sous forme d'une languette annulaire périphérique, et une couronne abrasive, également en forme d'anneau cylindrique, qui est fixée sur la couronne de fixation. La couronne abrasive est typiquement réalisée à base d'un liant durcissable, par exemple à base d'une résine thermodurcissable de type bakélite, comprenant des grains abrasifs de type connu en soi et du zirconium noyés dans le liant durci. Une pluralité d'encoches d'accrochage dans la couronne de fixation permet l'accrochage de la couronne abrasive sur le disque de support. Les encoches d'accrochage s'étendent radialement vers l'intérieur de la couronne de fixation de sorte à présenter sur le contour extérieur de la couronne de fixation un orifice d'entrée suivi d'un élargissement dans la direction circonférentielle, c.-à-d. dans une direction circonférentielle par rapport à la forme circulaire de la couronne de fixation. Autrement dit, chaque orifice d'entrée est une ouverture de l'encoche d'accrochage vers l'extérieur de la couronne de fixation mesurant, en circonférence de la couronne de fixation, une longueur d'arc plus petite qu'une longueur d'arc maximale que mesure de l'encoche d'accrochage. Ledit élargissement a une forme sensiblement arrondie. Il sera apprécié qu'une telle forme sensiblement arrondie de l'encoche d'accrochage dans le plan du disque de support permet d'obtenir une meilleure résistance de la couronne de fixation aux forces de contrainte exercées sur la couronne abrasive lors de l'utilisation de la lame de scie tout en assurant un accrochage fiable de la couronne abrasive sur la couronne de fixation.

Une lame de scie composée, comprenant une couronne abrasive, en particulier une couronne abrasive au zirconium, peut présenter un diamètre total compris entre 1000 mm et 2500 mm et s'apprête à être utilisée sur une machine à scier ou sur une tronçonneuse, pour la découpe à chaud, de préférence jusqu'à 1000°C, ou à froid, de préférence à température ambiante, de blooms, de billettes, de ronds, de poutrelles ou de rails en acier, par exemple à la sortie d'un train laminoir en sidérurgie.

Selon la présente invention ledit élargissement a avantageusement une forme sensiblement circulaire. Des encoches d'accrochage de forme circulaire peuvent être réalisées facilement par forage. De préférence, l'élargissement est délimité par un segment circulaire ayant un angle d'ouverture supérieur à 180°, c.-à-d. un segment d'un cercle au sens géométrique du terme, dont l'aire est supérieure au demi-cercle et dont la base du segment de cercle est plus petite que le diamètre de ce cercle. Plus préférentiellement, l'élargissement est délimité par un segment circulaire ayant un angle d'ouverture entre 240° et 300° afin d'obtenir un accrochage très fiable. Dans un mode de réalisation avantageux, ledit élargissement peut être précédé d'un orifice d'entrée en forme d'entonnoir, c.-à-d. un orifice d'entrée ouvrant une encoche d'accrochage vers l'extérieur de la couronne de fixation et formant un passage prolongé dont l'ouverture se rétrécie en allant vers l'intérieur de la couronne de fixation. Un tel orifice d'entrée permet de contribuer à ce que la couronne de fixation supporte mieux les forces de contrainte subies par la couronne abrasive.

Afin d'améliorer davantage l'accrochage de l'abrasif, selon la présente invention les encoches d'accrochage ont un diamètre représentant jusqu'à deux fois la largeur de la couronne de fixation, ce diamètre étant de préférence compris entre 50% et 200%, et plus préférablement entre 60 % à 180 % de la largeur de la couronne de fixation (c.-à-d. l'étendue radiale de cette couronne). De préférence, la largeur de la couronne de fixation représente entre 1% et 20% du diamètre total du disque de support. La couronne de fixation a une largeur qui dépend du diamètre total de la lame de scie et est de préférence comprise entre 40 mm et 80 mm. Autrement dit, la couronne de fixation a une forme annulaire dont la dimension dans le sens radial est comprise entre 40 mm et 80 mm.

La couronne abrasive se prolonge de manière avantageuse radialement au-delà du contour extérieur de la couronne de fixation de telle sorte que le prolongement représente entre 125% et 875% de la largeur de la couronne de fixation. En valeur absolue, ledit prolongement, c.-à-d. la largeur de la couronne abrasive excédant radialement le contour extérieur de la couronne de fixation, peut mesurer entre 100 mm et 350 mm suivant le diamètre total de la lame. Un tel prolongement de la couronne abrasive au-delà du contour extérieur de la couronne de fixation représente la partie utile en matériau abrasif effectivement utilisable pour le sciage ou le tronçonnage.

Afin d'assurer l'équilibrage des masses, les encoches d'accrochage sont agencées dans la couronne de fixation de sorte à être circonférentiellement espacées de manière sensiblement régulière, c.-à-d. que les encoches d'accrochage sont situées l'une par rapport à l'autre le long d'une circonférence de la couronne de fixation en relation espacée sensiblement régulière. Plus préférentiellement, les encoches d'accrochage sur la couronne de fixation sont espacées à écart angulaire sensiblement égal entre elles par un angle déterminé en fonction du diamètre du disque de support. Cet angle est de préférence compris entre 12° et 24° par rapport au centre géométrique de la couronne annulaire de fixation ce qui permet d'obtenir un nombre adéquat d'encoches d'accrochage.

La couronne de fixation présente avantageusement au moins un trou de passage entre au moins une paire des encoches d'accrochage pour le passage et l'accrochage de filaments de renforcement. De tels filaments de renforcement peuvent être utilisés pour renforcer la résine thermodurcissable de la couronne abrasive fixée sur la couronne de fixation. Plus préférentiellement, deux trous de passage sont situés entre chaque paire d'encoches d'accrochage en relation espacée sensiblement régulière le long d'une circonférence de la couronne de fixation afin d'assurer l'équilibrage.

Dans un mode de réalisation avantageux, le disque de support présente une ou plusieurs encoches d'allègement entre au moins une et de préférence entre chaque paire d'encoches d'accrochage pour alléger la couronne de fixation sur le disque de support. Les encoches d'allègement supplémentaires permettent d'alléger, ensemble avec des encoches d'accrochage de taille considérable, la couronne de fixation tout en améliorant de manière surprenante le comportement vibratoire et acoustique de la lame de scie lors de l'utilisation. Il sera apprécié qu'une telle amélioration du comportement acoustique de la lame de scie permet en outre de réduire le bruit de coupe de la lame de scie lors de l'utilisation. Par exemple, une diminution de bruit de plus de 40 dB (décibel) a été mesurée en pratique par rapport au bruit d'une lame de scie circulaire monobloc métallique dans les mêmes conditions d'utilisation. De préférence, la couronne de fixation présente une encoche d'allègement entre chaque paire d'encoches d'accrochage. Les encoches d'allègement peuvent par exemple être obtenues par découpage ou fraisage.

Avantageusement, chaque encoche d'allègement présente une symétrie par rapport à un plan généralement diamétral, c.-à-d. un plan qui est perpendiculaire au plan de la couronne de fixation et qui est parallèle à un diamètre de la lame de scie. De préférence, chaque encoche d'allègement a une forme en triangle isocèle dans le plan de la couronne torique, c.-à-d. une forme pointue s'étendant vers l'intérieur de la couronne de fixation dont les bords formés par la couronne de fixation représentent les côtés de même longueur. Il sera apprécié qu'une telle forme des encoches d'allègement permet de mieux supporter les contraintes exercées sur la couronne abrasive lors de l'utilisation de la lame de scie tout en permettant un fonctionnement de la lame de scie indifféremment du sens de coupe choisi (sens horaire ou anti-horaire). Autrement dit, la couronne de fixation présente une pluralité d'encoches d'allègement formées de telle sorte que la couronne de fixation présente un profil qui n'a pas d'orientation préférentielle dans le sens de rotation, c.-à-d. que la lame de scie peut s'utiliser indifféremment dans les deux sens de marche.

Selon la présente invention, la couronne de fixation est amincie par rapport au disque de support, de préférence de manière à ce que la couronne de fixation a une épaisseur plus mince d'au moins 3 mm par rapport à l'épaisseur du disque de support. Autrement dit, la couronne de fixation a préférentiellement une épaisseur plus mince d'au moins 3 mm par rapport à l'épaisseur d'une partie centrale du disque de support. Cette différence d'épaisseur est avantageusement comblée par l'épaisseur de la couronne abrasive qui recouvre latéralement la couronne de fixation sur laquelle elle est fixée.

Plus avantageusement, la couronne abrasive comble non seulement la différence d'épaisseur sus-mentionnée mais présente une épaisseur plus grande que la partie centrale du disque de support métallique, de sorte à dépasser en direction transversale, de préférence d'au moins 2 à 3 mm, de chaque côté de la partie centrale du disque de support. Cette différence en épaisseur permet une largeur de coupe qui est plus large que l'épaisseur du disque de support et évite ainsi des frottements du disque de support métallique avec un matériau à couper lors de l'utilisation.

Le disque de support a un diamètre préférentiellement compris entre 400 mm et 2200 mm et une épaisseur de la partie située à l'intérieur de la couronne de fixation qui mesure de préférence entre 5 mm et 15 mm. Le disque de support métallique est avantageusement constitué en un acier spécial choisi pour résister sans déformation à des températures élevées comprises entre 200°C - 400°C.

La lame de scie finie a un diamètre total compris de préférence entre 800 mm et 2500 mm et une largeur de coupe comprise de préférence entre 7 mm et 25 mm. Cet ordre de dimensions permet d'utiliser la lame de scie pour la découpe à chaud ou à froid de matériaux ferreux, en particulier d'acier, d'acier spécial, d'acier allié ou de fonte par exemple à la sortie de trains de laminoir.

Dans un mode de réalisation avantageux, la couronne de fixation présente sur au moins une partie de son contour extérieur un profil denté ayant une ou plusieurs dents c.-à-d. une ou plusieurs dents qui prolongent radialement la couronne de fixation. Les dents sont situées entre les orifices d'entrée des encoches d'accrochage, dans le cas où la couronne de fixation présente des encoches d'allègement bien entendu entre ces encoches d'allègement. De préférence, chaque dent admet une symétrie par rapport à un plan généralement diamétral, c.-à-d. un plan qui est perpendiculaire au plan de la couronne de fixation et qui passe par un diamètre de la lame de scie. De préférence, chaque dents a une forme en triangle isocèle, c.-à-d. une forme pointue s'étendant vers l'extérieur de la couronne de fixation ayant des côtés de même longueur. Il sera apprécié qu'une telle forme des dents permet d'améliorer davantage la résistance aux forces de contrainte lors de l'utilisation de la lame de scie tout en permettant un même fonctionnement de la lame de scie indifféremment du sens de marche. Autrement dit, la couronne de fixation présente une pluralité de dents formées de telle sorte que la couronne de fixation présente un profil qui n'a pas d'orientation préférentielle dans l'un ou l'autre sens de rotation de la lame de scie. Dans le cas un d'orifices d'entrée en forme d'entonnoir, une dent qui avoisine un tel orifice peut présenter un côté qui prolonge un côté de l'orifice en forme d'entonnoir. De même, une dent avoisinant une encoche d'allègement qui présente par exemple forme en triangle isocèle, peut présenter un côté qui prolongent le côté de l'encoches d'allègement. Il sera apprécié qu'une telle configuration des dents du profil denté de la couronne de fixation permet d'encore mieux soutenir les effort exercés sur la couronne abrasive.

Il sera apprécié que la lame de scie selon l'invention s'apprête particulièrement au sciage ou au tronçonnage à chaud ou à froid de matériaux ferreux, en particulier d'acier, d'acier spécial (p.ex. inox), d'acier allié, de fonte ou de matériaux non ferreux, et plus particulièrement à la découpe à chaud ou à froid de blooms, billettes, poutrelles, ronds, rails ou tubes en acier à la sortie de trains de laminoir dans les industries sidérurgique et de transformation des métaux.

### Brève description des dessins

D'autres particularités, avantages et caractéristiques de l'invention ressortiront de la description détaillée d'un mode de réalisation avantageux présenté ci-dessous, à titre d'illustration, en se référant aux dessins annexés. Ceux-ci montrent:
FIG.1: une vue en plan d'un disque de support avec couronne de fixation pour une lame de scie circulaire selon l'invention;
FIG.2: une vue en plan d'une lame de scie circulaire dotée d'un disque de support selon la FIG.1 et montrant une couronne abrasive fixée sur la couronne de fixation;
FIG.3: un détail agrandi d'une vue en plan d'une couronne de fixation selon un premier mode de réalisation préféré;
FIG.4: un détail agrandi d'une vue en plan d'une couronne de fixation selon un deuxième mode de réalisation préféré;
FIG.5: un détail agrandi d'une vue en plan d'une couronne de fixation selon un troisième mode de réalisation préféré;
FIG.6: une coupe radiale de la lame de scie circulaire détaillant les profils du disque de support et de la couronne de fixation selon l'invention.
FIG.7: une coupe radiale de la lame de scie circulaire détaillant les profils du disque de support, de la couronne de fixation et de la couronne abrasive selon l'invention.
Les mêmes références désignent des éléments identiques ou similaires.

### Description d'une exécution préférée

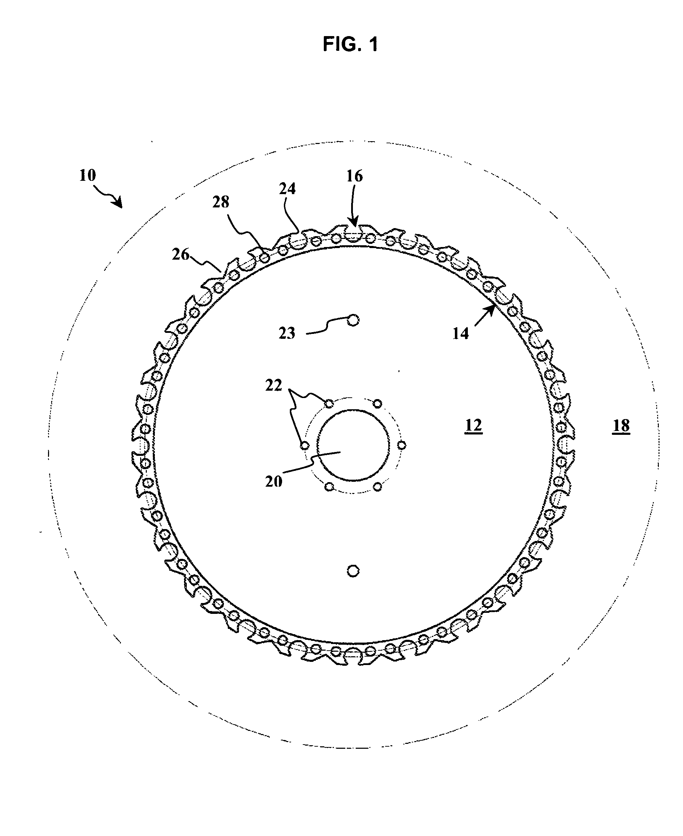

La FIG.1 représente une vue latérale globale d'une lame de scie 10 circulaire composée, c.-à-d. en deux parties selon la présente invention. La lame de scie 10 a un diamètre total compris entre 800 mm et 2500 mm (dans le plan de la FIG.1) et une largeur de coupe comprise entre 7 mm et 25 mm (dans un plan perpendiculaire à celui de la FIG.1), les dimensions exactes étant choisies selon l'utilisation visée, en outre en fonction des dimensions du produit à couper. La lame de scie 10 comprend un disque de support 12 métallique constitué d'un acier spécial qui présente des éléments d'alliage pour résister sans déformation à des températures élevées comprises entre 200°C - 400°C. Le disque de support 12 est fabriqué à partir d'une tôle en acier qui est usinée en forme de disque.

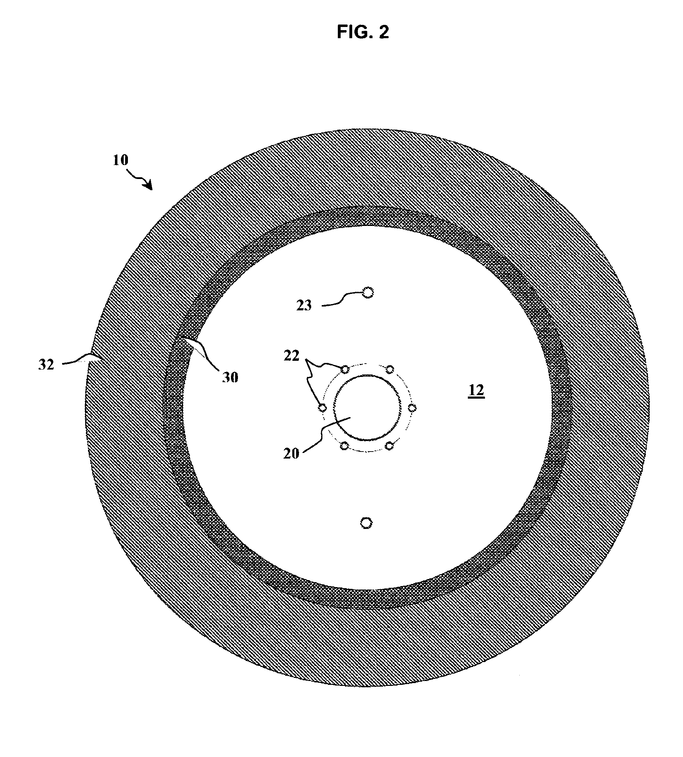

Comme on le voit sur la FIG.1, le disque de support 12 présente sur son pourtour une couronne de fixation 14 avec une pluralité d'encoches d'accrochage 16 crées lors de l'usinage du disque. On entend par couronne de fixation la région comprise entre deux cylindres concentriques à l'extrémité du disque de support 12. La couronne de fixation 14 est indiquée par hachures foncées à la FIG.2. Les encoches d'accrochage 16 permettent l'accrochage d'une couronne abrasive 18 fixée sur la couronne de fixation 14. La FIG.1 montre schématiquement le contour de la couronne abrasive 18 en traits interrompus.

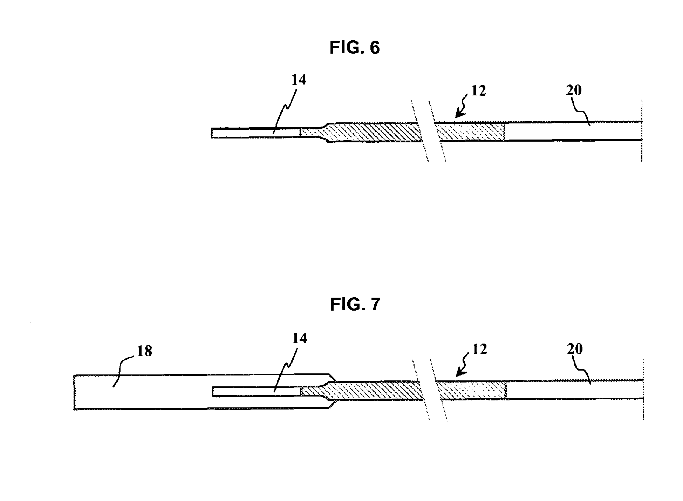

La couronne abrasive 18, montrée plus en détail à la FIG.2 et à la FIG.7, recouvre latéralement la couronne de fixation 14 et se prolonge radialement au-delà du contour extérieur de ladite couronne de fixation 14, par exemple de telle sorte que le prolongement mesure entre 100 mm et 350 mm. Typiquement, la couronne abrasive 18 est réalisée à base d'une résine thermodurcissable comprenant des grains abrasifs et des grains de zirconium noyés dans la résine polymérisée.

Le disque de support 12 présente en outre un alésage central 20 pour monter le disque de support 12 sur un mécanisme d'entraînement (non montré) et des trous d'entraînement excentriques 22 auxiliaires diamétralement opposés pouvant être utilisés pour l'accouplement dudit disque de support 12 au mécanisme d'entraînement. Le disque de support 12 présente également des trous de manutention 23 pour manipuler la lame de scie 10 sans risque d'endommagement de la couronne abrasive 18, par exemple lors du montage ou démontage de la lame de scie 10 sur le mécanisme d'entraînement. Suivant les dimensions totales de la lame de scie, le disque de support 12 lui-même peut avoir après usinage un diamètre compris entre 400 mm et 2200 mm et une épaisseur comprise entre 5 mm et 15 mm. La couronne de fixation 14 a une largeur représentant entre 1 % et 20% du diamètre total du disque de support 12, typiquement une largeur comprise entre 40 mm et 80 mm.

Selon l'invention montré à la FIG.1, les encoches d'accrochage 16 ont une forme circulaire, plus particulièrement une forme en segment circulaire 24 ayant un angle d'ouverture supérieur à 180° (degrés d'arc), de préférence un angle d'ouverture de 240° à 300°. Selon l'invention, les encoches d'accrochage 16 ont un diamètre pouvant aller au maximum jusqu'à peu près deux fois la largeur de la couronne de fixation 14, de préférence entre 60 % à 180% de la largeur de la couronne de fixation 14. Ces encoches d'accrochage 16 sont situées sur la couronne de fixation 14 en relation circonférentielle espacée régulière d'un angle compris entre 12° et 24°, par exemple de 15° degrés d'angle, par rapport au centre du disque de support 12. L'angle et donc le nombre d'encoches d'accrochage 16 est déterminé en fonction du diamètre du disque de support 12. Les encoches d'accrochage 16 peuvent être crées par découpage, par fraisage ou par simple forage.

On voit en outre sur la FIG.1, entre chaque paire d'encoches d'accrochage 16, une encoche d'allègement 26 pour alléger la couronne de fixation 14 et deux trous de passage circulaires 28 agencés dans la couronne de fixation 14. Les trous de passage 28 permet le passage et l'accrochage de filaments de renforcement et contribuent également à alléger le disque de support 12. Les encoches d'allègement 26 contribuent au soutien des forces de contrainte exercées sur la couronne abrasive 18 lors du sciage. Les encoches d'allègement 26 ont une forme en triangle isocèle de sorte à ne pas donner de direction préférentielle au profil de la couronne de fixation 14 dans le sens de coupe horaire ou anti-horaire. Les encoches d'allègement 26 sont aussi en relation espacée régulière, par exemple de 15° degrés d'angle par rapport au centre du disque de support 12. Il sera apprécié que les évidements ou vides supplémentaires formés dans la couronne de fixation 14 par les encoches d'allègement 26 ainsi que les trous de passage 28, en plus de ceux formés par les encoches d'accrochage 16, contribuent à l'accrochage fiable de couronne abrasive 18. Avantageusement, le volume en métal qui reste après création de ces évidements par usinage dans la région délimitée par le rayon inférieur et le rayon supérieur de la couronne de fixation 14 représente de l'ordre de 55% à 65% du volume initial du disque de support 12 dans cette région, le volume de métal enlevé par usinage étant déterminé en fonction du diamètre du disque de support 12.

La FIG.2 montre en vue latérale une lame de scie 10 circulaire selon la FIG.1 en état achevé et montre schématiquement la couronne abrasive 18 fixée sur la couronne de fixation 14. La couronne abrasive 18 comprend une première partie de la couronne abrasive 30 qui recouvre latéralement la couronne de fixation 14 et une deuxième partie de la couronne abrasive 32 qui prolonge radialement la lame de scie 10 circulaire au-delà de la couronne de fixation 14. La première partie 30 représente la partie de l'abrasif servant à la fixation sur la couronne de fixation 14. La deuxième partie 32 forme un prolongement de longueur comprise entre 100 mm et 350 mm et représente la partie utile de l'abrasif.

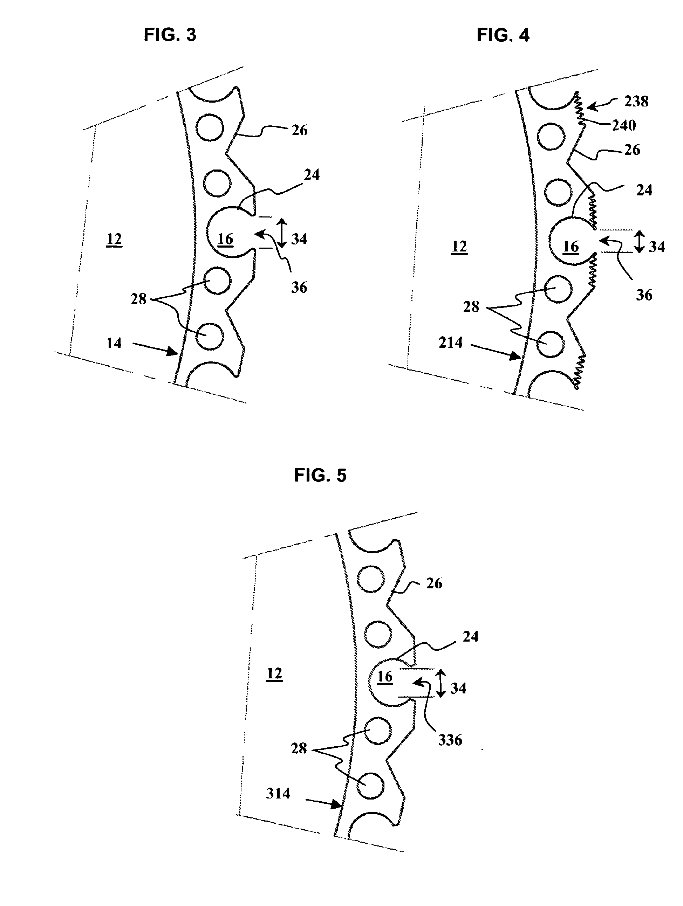

La FIG.3 représente une vue partielle latérale de la couronne de fixation 10 du disque de support 12 selon un premier mode de réalisation qui correspond à celui montré à la FIG.1. Chaque encoche d'accrochage 16 a une forme en segment circulaire 24 ayant un angle d'ouverture supérieur à 180°, de préférence un angle d'ouverture de 240° à 300°. Le référence 34 indique la base du segment circulaire 24. Cette base a donc une longueur plus petite qu'un diamètre de l'encoche d'accrochage 16, autrement dit, une longueur d'arc inférieure à la longueur d'arc maximale de l'évidemment formé par l'encoche d'accrochage 16. Selon l'invention, chaque encoche d'accrochage 16 a un diamètre représentant jusqu'à deux fois la largeur de la couronne de fixation 14, de préférence entre 60 % à 180% de la largeur de la couronne de fixation 14 afin d'assurer un accrochage fiable de l'abrasif. Entre chaque paire d'encoches d'accrochage 16 se situent une encoche d'allègement 26 en forme de triangle isocèle et deux trous de passage 28 circulaires permettant le passage et l'accrochage de filaments de renforcement. Des formes de l'encoche d'allègement 26 autres qu'un triangle isocèle qui admettent aussi une symétrie par rapport à un plan diamétral bissecteur entre deux encoches d'accrochage 16 sont également envisageable.

La FIG.4 représente une vue partielle latérale d'une autre réalisation d'une couronne de fixation 214 sur un disque de support 12 similaire à celui des FIG.1-3. Outre les éléments décrits ci-dessus, la couronne de fixation 214 selon cette deuxième réalisation présente sur son contour extérieur, entre les orifices d'entrée 36 des encoches d'accrochage 16 et les encoches d'allègement 26, un profil denté 238 avec une pluralité de dents 240 en forme de triangles isocèles qui prolongent radialement la couronne de fixation 214. Chaque dent 240 admet une symétrie par rapport à un plan qui est perpendiculaire au plan de la couronne de fixation 214 et qui est sensiblement parallèle à un diamètre de la lame de scie 10, c.-à-d. un plan qui est généralement mais pas nécessairement strictement diamétral. Ces dents 240 supplémentaires sont de dimension faible par rapport aux encoches d'accrochage 16 et aux encoches d'allègement 26 mais contribuent à améliorer l'accrochage de l'abrasif et au soutien des forces tangentielles exercées sur la couronne abrasive 18. Comme on le voit sur la FIG.4, à l'exception des dents avoisinant une encoche d'accrochage 16 ou une encoche d'allègement 26, les dents 240 du profil denté 238 sur la couronne de fixation 214 ont une forme de triangle isocèle qui prolongent radialement la couronne de fixation 14. Les dents 240 avoisinant une encoche d'accrochage 16 qui a un orifice d'entrée 36 en forme d'entonnoir présentent un côté de dent qui prolonge le contour de l'orifice d'entrée 36. De même, les dents 240 avoisinant une encoche d'allègement 26 présentent un côté de dent qui prolonge le contour de l'encoche d'allègement 26. Le profil denté 238 peut être crée sur le disque de support 12 moyennant un usinage approprié, p.ex. par fraisage, découpage ou poinçonnage.

La FIG.5 représente une vue partielle latérale d'une troisième réalisation d'une couronne de fixation 314 sur un disque de support 12 similaire à celui des FIG.1-3. Dans cette troisième réalisation particulière, outre les éléments décrits ci-dessus en référence aux FIG.1-4, chaque encoche d'accrochage 16 présente sur le contour extérieur de la couronne de fixation 14 un orifice d'entrée 336 de conception particulière, à savoir en forme d'entonnoir suivi d'un élargissement 24 dans la direction circonférentielle de la couronne de fixation 14. Tout comme à la FIG.4, l'élargissement 24 formant un segment circulaire ayant un angle d'ouverture supérieur à 180°. Les deux côtés droit agencés en biaisement de chaque orifice d'entrée 336 en forme d'entonnoir peuvent être obtenus par découpage ou fraisage, et contribuent au soutien des forces tangentielles exercées sur la couronne abrasive 18. Il sera apprécié qu'un profil denté du contour extérieur de la couronne de fixation selon la FIG.4 peut aussi être prévu sur le contour extérieur de la couronne de fixation 14, 314 selon les réalisations montrées à la FIG.5 et la FIG.1.

La FIG.6 représente une vue partielle d'une coupe radiale de la lame de scie 10 circulaire détaillant le profil de la couronne de fixation 14 en forme de languette périphérique amincie. Selon l'invention, la couronne de fixation 14 est amincie par rapport à l'épaisseur d'une partie centrale du disque de support 12 de préference d'au moins 3 mm par usinage brut donnant une surface rugueuse à la couronne de fixation 14 qui contribue à l'accrochage de la couronne abrasive 18, notamment en laissant des stries au niveau du rayonnage de transition entre la face plane du disque de support 12 et la partie plane de la couronne de fixation 14. La partie centrale du disque de support 12 admet une épaisseur entre 5 mm et 15 mm.

La FIG.7 représente une vue partielle d'une coupe radiale de la lame de scie 10 circulaire comme à la FIG.6 détaillant le profil de la couronne abrasive 18 fixée sur la couronne de fixation 14. La couronne abrasive 18 admet une épaisseur comprise entre 7 mm et 25 mm, de préférence une épaisseur plus large que l'épaisseur d'une partie centrale du disque de support 12 de sorte à faire saillie axialement de chaque côté d'au moins 2 à 3 mm. Cette différence en épaisseur permet une largeur de coupe de la lame de scie 10 plus large que l'épaisseur du disque de support 12 afin d'éviter des frottements importants de parties latérales du disque de support 12 métallique avec un matériau à couper lors de l'utilisation de la lame de scie 10.

Une lame de scie selon l'une des exécutions préférées montrées aux FIG.1 à FIG.7 peut être fabriquée moyennant les étapes de fabrication suivantes : mise à disposition d'une ébauche métallique, p.ex. sous forme d'une tôle d'acier spécial résistant à des températures élevées; création d'un alésage central 20; perçage de trous d'entraînement excentriques 22 et de trous de manutention 23; mise au rond de l'ébauche par usinage radial du pourtour extérieur; création d'une languette amincie servant de base à une couronne de fixation 14, 214, 314 par diminution en épaisseur axiale de la région périphérique moyennant un type d'usinage connu en soi, p.ex. par fraisage; création d'encoches d'accrochage 16 de forme arrondie, création d'encoches d'allègement 26 et de trous de passage 28 par usinage approprié p.ex. par découpage, fraisage, forage ou poinçonnage afin de réaliser la couronne de fixation 14, 214, 314 ; optionnellement usinage d'orifices d'entrée en entonnoir 236 et/ou de profils dentés 238; ensuite planage, tensionnage et équilibrage du disque métallique résultant utilisant des méthodes connues en soi. Après création du disque de support métallique 12 présentant une couronne de fixation 14, 214, 314 selon l'invention, une couronne abrasive 18 est fixée sur la couronne de fixation 14, 214, 314 par une méthode appropriée connue en soi.

### Légende:

- 10: lame de scie
- 12: disque de support
- 14 ; 214 ; 314: couronne de fixation
- 16: encoche d'accrochage
- 18: couronne abrasive
- 20: alésage central
- 22: trou d'entraînement excentrique
- 23: trou de manutention
- 24: segment circulaire
- 26: encoche d'allégement
- 28: trou de passage
- 30: première partie de la couronne abrasive
- 32: deuxième partie de la couronne abrasive
- 34: base du segment circulaire
- 36 ; 336: orifice d'entrée
- 238: profil dente
- 240: dent

## Revendications

1. Lame de scie (10) circulaire comprenant:
un disque de support (12) métallique présentant sur son pourtour une couronne de fixation (14 ;214 ;314);
une couronne abrasive (18) fixée sur ladite couronne de fixation (14 ;214 ;314) du disque de support (12);
une pluralité d'encoches d'accrochage (16) sur ladite couronne de fixation (14 ;214 ;314) pour l'accrochage de ladite couronne abrasive (18), lesdites encoches d'accrochage (16) s'étendant radialement vers l'intérieur de ladite couronne de fixation (14 ;214 ;314) de sorte à présenter sur le contour extérieur de ladite couronne de fixation (14 ;214 ;314) un orifice d'entrée (36 ;336) suivi d'un élargissement dans la direction circonférentielle;
**caractérisée en ce que**
ledit élargissement a une forme sensiblement circulaire et **en ce que** lesdites encoches d'accrochage (16) ont un diamètre entre 60% à 200%, de préférence entre 60% à 180%, de la largeur de ladite couronne de fixation, ladite couronne de fixation étant amincie par rapport à une partie centrale dudit disque de support (12).

2. Lame de scie (10) selon la revendication 1, **caractérisée en ce que** ledit élargissement est délimité par un segment circulaire (24) ayant un angle d'ouverture supérieur à 180°, de préférence un angle d'ouverture de 240° à 300°.

3. Lame de scie (10) selon la revendication 1 à 2, **caractérisée en ce que** ledit élargissement est précédé d'un orifice d'entrée (336) en forme d'entonnoir.

4. Lame de scie (10) selon la revendication 1 à 3, **caractérisée en ce que** la largeur de ladite couronne de fixation (14 ;214 ;314) représente entre 1% et 20% du diamètre total dudit disque de support (12), de préférence une largeur comprise entre 40 mm et 80 mm.

5. Lame de scie (10) selon l'une des revendications 1 à 4, **caractérisée en ce que** ladite couronne abrasive (18) se prolonge radialement au-delà du contour extérieur de ladite couronne de fixation (14 ;214 ;314) de telle sorte que ledit prolongement représente entre 125% et 875% de la largeur de ladite couronne de fixation (14 ;214 ;314), de préférence entre 100 mm et 350 mm.

6. Lame de scie (10) selon l'une des revendications 1 à 5, **caractérisée en ce que** lesdites encoches d'accrochage (16) sont agencées dans ladite couronne de fixation (14 ;214 ;314) en relation circonférentielle espacée sensiblement régulière.

7. Lame de scie (10) selon l'une des revendications 1 à 6, **caractérisée en ce que** ladite couronne de fixation (14 ;214 ;314) présente au moins un trou de passage (28) entre au moins une paire desdites encoches d'accrochage (16) pour le passage et l'accrochage de filaments de renforcement.

8. Lame de scie (10) selon l'une des revendications 1 à 7, **caractérisée en ce que** ledit disque de support (12) présente une ou plusieurs encoches d'allègement (26) entre au moins une paire desdites encoches d'accrochage (16) pour alléger ladite couronne de fixation (14 ;214 ;314) sur ledit disque de support (12), chaque encoche d'allégement (26) étant préférablement symétrique par rapport à un plan qui est perpendiculaire au plan de ladite couronne de fixation (14 ;214 ;314) et passe par un diamètre de ladite lame de scie (10), chaque encoche d'allégement (26) ayant plus préférablement une forme en triangle isocèle.

9. Lame de scie (10) selon l'une des revendications 1 à 8, **caractérisée en ce que** ladite couronne de fixation (14 ;214 ;314) a une épaisseur plus mince d'au moins 3 mm par rapport à l'épaisseur d'une partie centrale dudit disque de support (12).

10. Lame de scie (10) selon l'une des revendications 1 à 9, **caractérisée en ce que** ledit disque de support (12) a un diamètre compris entre 400 mm et 2200 mm et de préférence une épaisseur comprise entre 5 mm et 15 mm.

11. Lame de scie (10) selon l'une des revendications 1 à 10, **caractérisée en ce que** ladite lame de scie (10) a un diamètre total compris entre 800 mm et 2500 mm et de préférence une largeur de coupe comprise entre 7 mm et 25 mm.

12. Lame de scie (10) selon l'une des revendications 1 à 11, **caractérisée en ce que** ladite couronne de fixation (214) présente sur au moins une partie de son contour extérieur, entre lesdits orifices d'entrée (36) desdites encoches d'accrochage (16) un profil denté (238) ayant une ou plusieurs une dents (240), chaque dent (240) admettant préférablement une symétrie par rapport à un plan qui est perpendiculaire au plan de ladite couronne de fixation (238) et sensiblement parallèle à un diamètre de ladite lame de scie (10), chaque dent (240) ayant plus préférablement une forme en triangle isocèle.

13. Utilisation d'une lame de scie (10) selon l'une des revendications 1 à 12 pour la découpe à chaud ou à froid de matériaux ferreux, en particulier d'acier, d'acier spécial, d'acier allié ou de fonte.

## Claims

1. A circular saw blade (10) comprising:
a metallic support disc (12) having a mounting ring (14; 214; 314) on the periphery thereof;
an abrasive ring (18) mounted on said mounting ring (14; 214; 314) of the support disc (12);
a plurality of coupling notches (16) on said mounting ring (14; 214; 314) for coupling said abrasive ring (18), said coupling notches (16) extending radially towards the inside of said mounting ring (14; 214; 314) so as to have on the external contour of said mounting ring (14; 214; 314) an inlet orifice (36; 336) followed by a widening in the circumferential direction;
**characterised in that**
said widening is substantially circular in shape and **in that**
said coupling notches (16) have a diameter of between 60% and 200%, preferably between 60% and 180%, of the width of said mounting ring, said mounting ring being thinned relative to a central part of said support disc (12).

2. A saw blade (10) according to claim 1, **characterised in that** said widening is defined by a circular segment (24) having an opening angle of greater than 180°, preferably an opening angle of 240° to 300°.

3. A saw blade (10) according to claims 1 to 2, **characterised in that** said widening is preceded by a funnel-shaped inlet orifice (336).

4. A saw blade (10) according to claims 1 to 3, **characterised in that** the width of said mounting ring (14; 214; 314) amounts to between 1% and 20% of the total diameter of said support disc (12), preferably to a width of between 40 mm and 80 mm.

5. A saw blade (10) according to any one of claims 1 to 4, **characterised in that** said abrasive ring (18) projects radially beyond the external contour of said mounting ring (14; 214; 314) such that said projection amounts to between 125% and 875% of the width of said mounting ring (14; 214; 314), preferably to between 100 mm and 350 mm.

6. A saw blade (10) according to any one of claims 1 to 5, **characterised in that** said coupling notches (16) are arranged in said mounting ring (14; 214; 314) in a substantially regularly spaced circumferential relationship.

7. A saw blade (10) according to any one of claims 1 to 6, **characterised in that** said mounting ring (14; 214; 314) has at least one passage hole (28) between at least one pair of said coupling notches (16) for passing and coupling reinforcing filaments.

8. A saw blade (10) according to any one of claims 1 to 7, **characterised in that** said support disc (12) has one or more weight-reducing notches (26) between at least one pair of said coupling notches (16) to reduce the weight of said mounting ring (14; 214; 314) on said support disc (12), each weight-reducing notch (26) preferably being symmetrical relative to a plane which is perpendicular to the plane of said mounting ring (14; 214; 314) and passes through a diameter of said saw blade (10), each weight-reducing notch (26) more preferably having the shape of an isosceles triangle.

9. A saw blade (10) according to any one of claims 1 to 8, **characterised in that** said mounting ring (14; 214; 314) is of a thickness which is at least 3 mm thinner than the thickness of a central part of said support disc (12).

10. A saw blade (10) according to any one of claims 1 to 9, **characterised in that** said support disc (12) has a diameter of between 400 mm and 2200 mm and preferably a thickness of between 5 mm and 15 mm.

11. A saw blade (10) according to any one of claims 1 to 10, **characterised in that** said saw blade (10) has a total diameter of between 800 mm and 2500 mm and preferably a kerf of between 7 mm and 25 mm.

12. A saw blade (10) according to any one of claims 1 to 11, **characterised in that** said mounting ring (214) has on at least one part of the external contour thereof, between said inlet orifices (36) of said coupling notches (16), a toothed profile (238) having one or more teeth (240), each tooth (240) preferably exhibiting symmetry relative to a plane which is perpendicular to the plane of said mounting ring (238) and substantially parallel to a diameter of said saw blade (10), each tooth (240) more preferably having the shape of an isosceles triangle.

13. Use of a saw blade (10) according to any one of claims 1 to 12 for hot or cold cutting of ferrous materials, in particular steel, special steel, alloy steel or cast iron.

## Patentansprüche

1. Kreissägeblatt (10) mit:
- einer metallischen Trägerscheibe (12), die auf ihrem Umfang einen Befestigungskranz (14; 214; 314) aufweist,
- einem Schleifkranz (18), der auf dem Befestigungskranz (14; 214; 314) der Trägerscheibe (12) befestigt ist,
- einer Mehrzahl von Einhängekerben (16) am Befestigungskranz (14; 214; 314), um den Schleifkranz (18) einzuhängen, wobei die Einhängekerben (16) sich radial zum Inneren des Befestigungskranzes (14; 214; 314) so erstrecken, dass sie auf der Außenkontur des Befestigungskranzes (14; 214; 314) eine Eingangsöffnung (36; 336) aufweisen, auf die eine Ausweitung in Umfangsrichtung folgt,
**dadurch gekennzeichnet, dass**
- die Ausweitung im Wesentlichen kreisförmig ist und
- die Einhängekerben (16) einen Durchmesser aufweisen, dessen Abmessung zwischen 60 % und 200 %, vorzugsweise zwischen 60 % und 180 % der Breite des Befestigungskranzes liegt, wobei der Befestigungskranz sich in Bezug auf einen mittigen Abschnitt der Trägerscheibe (12) verjüngt.

2. Sägeblatt (10) nach Anspruch 1, **dadurch gekennzeichnet, dass** die Ausweitung durch ein Kreissegment (24) mit einem Öffnungswinkel größer als 180°, vorzugsweise mit einem Öffnungswinkel von 240° bis 300° begrenzt ist.

3. Sägeblatt (10) nach Anspruch 1 bis 2, **dadurch gekennzeichnet, dass** der Ausweitung eine trichterförmige Eingangsöffnung (336) vorgelagert ist.

4. Sägeblatt (10) nach Anspruch 1 bis 3, **dadurch gekennzeichnet, dass** die Breite des Befestigungskranzes (14; 214; 314) zwischen 1 % und 20 % des Gesamtdurchmessers der Trägerscheibe (12) darstellt, vorzugsweise einer Breite zwischen 40 mm und 80 mm entspricht.

5. Sägeblatt (10) nach einem der Ansprüche 1 bis 4, **dadurch gekennzeichnet, dass** der Schleifkranz (18) radial über die Außenkontur des Befestigungskranzes (14; 214; 314) hinaus derart ragt, dass der hinausragende Teil zwischen 125 % und 875 % der Breite des Befestigungskranzes (14; 214; 314) darstellt, vorzugsweise zwischen 100 mm et 350 mm beträgt.

6. Sägeblatt (10) nach einem der Ansprüche 1 bis 5, **dadurch gekennzeichnet, dass** die Einhängekerben (16) im Befestigungskranz (14; 214; 314) im Wesentlichen regelmäßig beabstandet auf dessen Umfang angeordnet sind.

7. Sägeblatt (10) nach einem der Ansprüche 1 bis 6, **dadurch gekennzeichnet, dass** der Befestigungskranz (14; 214; 314) mindestens ein Durchgangsloch (28) zwischen mindestens einem Paar Einhängekerben (16) für die Durchführung und die Einhängung von Verstärkungsdrähten aufweist.

8. Sägeblatt (10) nach einem der Ansprüche 1 bis 7, **dadurch gekennzeichnet, dass** die Trägerscheibe (12) eine oder mehrere Entlastungskerben (26) zwischen mindestens einem Paar Einhängekerben (16) für die Entlastung des Befestigungskranzes (14; 214; 314) auf der Trägerscheibe (12) aufweist, wobei jede Entlastungskerbe (26) vorzugsweise symmetrisch zu einer Ebene ist, die senkrecht zu der Ebene des Befestigungskranzes (14; 214; 314) verläuft und ein Durchmesser des Sägeblatts (10) durchquert, wobei jede Entlastungskerbe (26) besonders bevorzugt die Form eines gleichschenkligen Dreiecks aufweist.

9. Sägeblatt (10) nach einem der Ansprüche 1 bis 8, **dadurch gekennzeichnet, dass** der Befestigungskranz (14; 214; 314) eine Dicke aufweist, die in Bezug auf die Dicke eines mittigen Abschnitts der Trägerscheibe (12) mindestens 3 mm geringer ist.

10. Sägeblatt (10) nach einem der Ansprüche 1 bis 9, **dadurch gekennzeichnet, dass** die Trägerscheibe (12) einen Durchmesser zwischen 400 mm und 2200 mm und vorzugsweise eine Dicke zwischen 5 mm und 15 mm aufweist.

11. Sägeblatt (10) nach einem der Ansprüche 1 bis 10, **dadurch gekennzeichnet**, das Sägeblatt (10) einen Gesamtdurchmesser zwischen 800 mm und 2500 mm und vorzugsweise eine Schnittbreite zwischen 7 mm und 25 mm aufweist.

12. Sägeblatt (10) nach einem der Ansprüche 1 bis 11, **dadurch gekennzeichnet, dass** der Befestigungskranz (214) auf mindestens einem Abschnitt seiner Außenkontur zwischen den Eingangsöffnungen (36) der Einhängekerben (16) ein gezacktes Profil (238) mit einer oder mehreren Zacken (240) aufweist, wobei jede Zacke (240) vorzugsweise eine Symmetrie zu einer Ebene aufweist, die senkrecht zu der Ebene des Befestigungskranzes (238) und im Wesentlichen parallel zu einem Durchmesser des Sägeblatts (10) verläuft, wobei jede Zacke (240) besonders bevorzugt die Form eines gleichschenkligen Dreiecks aufweist.

13. Verwendung eines Sägeblatts (10) nach einem der Ansprüche 1 bis 12 zum Warm- oder Kaltschneiden von eisenhaltigen Materialien, insbesondere Stahl, Sonderstahl, legiertem Stahl oder Guss.
